# EUROPEAN PATENT APPLICATION

(11) **EP 4 206 302 A1**
(43) Date of publication of application: **05.07.2023**
(21) Application number: 21218015.2
(22) Date of filing: 28.12.2021
(51) Int. Cl.: C09K 11/77

(54) **A3B5O12:RE GARNET NANOPARTICLES**

(71) Applicant: Seaborough IP I B.V., 1098 XG Amsterdam (NL)
(72) Inventor: BERENDS, Anne Claire, 3551 TJ Utrecht (NL)
(74) Representative: Hoyng Rokh Monegier B.V.

(57) **Abstract**

The invention provides a method for preparing A₃B₅O₁₂:RE garnet nanoparticles, wherein A is one or more of yttrium, lutetium and gadolinium, B is one or more of aluminum, gallium, and scandium, and RE is a rare-earth metal, comprising the steps of:
preparing a mixture comprising metal hydroxide nanosheets and metal ions in a nonpolar solvent, heating the mixture to obtain particles, separating the particles from the mixture, and
heating the separated particles to obtain A₃B₅O₁₂:RE garnet nanoparticles, wherein: the metal hydroxide nanosheets comprise hydroxides of A and the metal ions comprise ions of B; or
wherein the metal hydroxide nanosheets comprise hydroxides of B and the metal ions comprise ions of A; and wherein the metal hydroxide nanosheets comprise RE, and/or the metal ions comprise RE.

## Description

### FIELD OF THE INVENTION

The invention relates to rare-earth metal doped A₃B₅O₁₂:RE garnet nanoparticles. The invention further relates to methods of making rare-earth metal doped A₃B₅O₁₂:RE garnet nanoparticles. The invention further relates to luminescent materials and compositions comprising the nanoparticles of the invention. The invention further relates to devices comprising the luminescent material and/or composition of the invention.

### BACKGROUND OF THE INVENTION

Luminescent down-conversion materials play an important role in solid-state lighting devices for illumination and display applications, among others.

Y₃Al₅O₁₂:Ce (YAG:Ce) is a well-known down-conversion material used on micron-scale in various applications, such as white LEDs.

Lu₃Al₅O₁₂:Ce (LuAG:Ce) is similarly a well-known down-conversion material used on micron-scale in various applications, such as white LEDs.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET.

A common method to prepare sub-micron aluminum garnet particles is 'coprecipitation'. Yttrium and aluminum ions are dissolved in water and coprecipitated as yttrium aluminum hydroxide-based precipitates. However, this precipitation is very pH dependent and this is difficult to control. As a result, the Al- and Y-based products precipitate inhomogeneously in time and space. Additionally, the precipitated products form networks instead of discrete particles. Calcination to Y₃Al₅O₁₂ yields products that are larger than desired.

Thus, there is a need for rare-earth metal doped garnet particles exhibiting high photoluminescence QY while keeping the obtained particles small (< 20 nm) and for a method for the preparation thereof.

### SUMMARY OF THE INVENTION

According to the invention, there is provided a method for preparing A₃B₅O₁₂:RE garnet nanoparticles, wherein A is one or more of yttrium, lutetium and gadolinium, B is one or more of aluminum, gallium, and scandium, and RE is a rare-earth metal, comprising the steps of:
a. preparing a mixture comprising metal hydroxide nanosheets and metal ions in a nonpolar solvent,
b. heating the mixture to obtain particles,
c. separating the particles from the mixture, and
d. heating the separated particles to obtain A₃B₅O₁₂:RE garnet nanoparticles,
wherein:
- the metal hydroxide nanosheets comprise hydroxides of A, and the metal ions comprise ions of B, or
- the metal hydroxide nanosheets comprise hydroxides of B, and the metal ions comprise ions of A,
and wherein the metal hydroxide nanosheets comprise RE, and/or the metal ions comprise ions of RE.

According to the invention, there is further provided A₃B₅O₁₂:RE garnet nanoparticles obtainable by the method of the invention, wherein A is one or more of yttrium, lutetium and gadolinium, B is one or more of aluminum, gallium, and scandium, and RE is a rare-earth metal.

According to the invention there is further provided a luminescent composition comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises the nanoparticles according to the invention.

The nanoparticles according to the invention show good absorption/emission properties and are suited for mixing in luminescent compositions. They have high photoluminescence quantum yield (QY) and crystallinity, even at small particle sizes. They can advantageously be used in compositions, wherein non-radiative energy transfer (sometimes also referred to as Fluorescent Resonance Energy Transfer, FRET) is desired.

The method according to the invention allows obtaining the nanoparticles according to the invention.

### BRIEF DESCRIPTION OF THE FIGURES

FIGURE 1 shows the X-Ray Diffractogram (XRD) of the particles obtained in Example 3.
FIGURE 2 shows the emission spectrum of Example 3 when irradiated at 488 nm.
FIGURE 3 shows the X-Ray Diffractogram (XRD) of the particles obtained in Example 4.
FIGURE 4 shows the emission spectrum of Example 4 when irradiated at 488 nm.
FIGURE 5 shows the X-Ray Diffractogram (XRD) of the particles obtained in Example 5.
FIGURE 6 shows the emission spectrum of Example 5 when irradiated at 488 nm.

### DETAILED DESCRIPTION OF THE INVENTION

### Preparation method

The invention provides a method for preparing A₃B₅O₁₂:RE garnet nanoparticles, wherein A is one or more of yttrium, lutetium and gadolinium, B is one or more of aluminum, gallium, and scandium, and RE is a rare-earth metal.

The annotation ":RE" means that the material is doped with RE. The doping ions are present at the sites where A would reside.

A is one or more of yttrium, lutetium and gadolinium, which are rare-earth metals. RE is a rare-earth metal. Rare-earth metals are the elements with atomic numbers 57-71. Preferably, RE comprises cerium, terbium, europium, or a mixture thereof. More preferably, RE is in a trivalent oxidation state. Eu³⁺ shows, upon suitable excitation, red-emission. Ce³⁺ shows, when embedded in a suitable garnet host lattice, strong blue absorption and upon suitable excitation a broad yellow-green emission band. Tb³⁺ shows, upon suitable excitation, yellow-green emission.

### Preparation method

The method comprises the steps of a. preparing a mixture comprising metal hydroxide nanosheets and metal ions in a nonpolar solvent, b. heating the mixture to obtain particles, c. separating the particles, and d. heating the separated particles to obtain A₃B₅O₁₂:RE garnet nanoparticles.

### Step a. preparing a mixture comprising metal hydroxide nanosheets and metal ions in a nonpolar solvent

The method comprises preparing a mixture comprising metal hydroxide nanosheets and metal ions in a nonpolar solvent.

Nanosheets are herein defined as a particle having larger sizes of the lateral dimensions than the size of the thickness (size of the smallest dimension). For instance, the nanosheets may be nanoparticles of which the size of at least one, but preferably of both other dimensions than that of the smallest dimension is at least 5 times, preferably at least 10 times the size of the smallest dimension of the particle. The nanosheets may for instance have in at least one, preferably two dimensions a size of ≥ 5 nm and ≤ 500 nm, preferably ≥ 50 nm and ≤ 500 nm, and a thickness ≥ 0.5 nm and ≤ 10 nm. Preferably one dimension of the nanosheet is ≥ 0.5 nm and ≤ 10 nm, as measured using transmission electron microscopy (TEM).

In an embodiment, the metal hydroxide nanosheets comprise hydroxides of A. In this embodiment, the metal hydroxide nanosheets comprise yttrium hydroxide nanosheets, lutetium hydroxide nanosheets, gadolinium hydroxide nanosheets, mixtures thereof; nanosheets comprising hydroxides of two or more of yttrium, lutetium, and gadolinium (i.e. (YₓLu_{y}Gd_{1-x-y})-hydroxide nanosheets, wherein 0≤x<1, 0≤y<1, 0<x+y<1), mixtures thereof; and/or mixtures thereof.

In an embodiment, the metal hydroxide nanosheets comprise hydroxides of B. In this embodiment, the metal hydroxide nanosheets comprise aluminum hydroxide nanosheets, gallium hydroxide nanosheets, scandium hydroxide nanosheets, mixtures thereof; nanosheets comprising hydroxides of two or more of aluminum, gallium, and scandium (i.e. (AlₓGa_{y}Sc_{1-x-y})-hydroxide nanosheets, wherein 0≤x<1, 0≤y<1, 0<x+y<1), mixtures thereof; and/or mixtures thereof.

The metal hydroxide nanosheets may comprise RE. The metal hydroxide nanosheets may be doped with the rare-earth metal RE, and/or the metal hydroxide nanosheets may comprise RE hydroxide nanosheets.

Rare earth hydroxide nanosheets, such as yttrium hydroxide nanosheets, lutetium hydroxide nanosheets and gadolinium hydroxide nanosheets, and/or (i.e. (YₓLu_{y}Gd_{i-x-y})-hydroxide nanosheets, wherein 0≤x<1, 0≤y<1, 0<x+y<1), can be synthesized in various ways. For example, these can be synthesized via homogeneous precipitation as described by Geng et al. Inorganic Chemistry, Vol. 48, No. 14, 2009. Another synthesis method is via a hydrothermal reaction as described by Zhu et al. Chem. Mater. 2010, 22, 4204-4213.

Aluminum hydroxide nanosheets, gallium hydroxide nanosheets and scandium hydroxide nanosheets, and/or (AlₓGa_{y}Sc_{1-x-y})-hydroxide nanosheets, wherein 0≤x<1, 0≤y<1, 0<x+y<1), can be prepared via a similar homogeneous precipitation route.

The metal hydroxide nanosheets may be doped with the rare-earth metal RE. A person skilled in the art can determine the relative concentrations of (A or B):RE in the synthesis method to obtain the right doping concentration in the resulting nanosheets.

Homogeneous precipitation of metal hydroxide nanosheets can be performed as follows:
A salt of the metal is dissolved in water. Suitable salts are nitrates, sulfates, chlorides, bromides, etc. and/or hydrated versions thereof.

K- or Na-based salt is added, e.g. KNO₃, NaNO₃, KCl, NaCl, etc. The amount of the potassium- or sodium-based salt is for example 10 times or more than the amount of the metal salt.

A precipitating agent is added such that a precipitation reaction occurs. Suitable precipitating agents dissolve and/or hydrolyze in water to give a pH in the right regime for the precipitation to occur. Suitable precipitating agents include for example urea, NH₃HCO₃, hexamethylenetetramine.

The reaction is performed under inert atmosphere. The reaction is performed at elevated temperature, preferably between 50 and 100 °C, more preferably between 80 and 100 °C, even more preferably between 90 and 100 °C. The reaction takes place for 10 minutes to 5 hours at the desired temperature, more preferably for 1 hour.

After the reaction the mixture is cooled to room temperature and the formed precipitate is purified.

The mixture comprises a nonpolar solvent. A nonpolar solvent may be defined as a solvent having a dielectric constant of less than 15. Preferably, the nonpolar solvent has a high boiling point, such as a boiling point of above 100 °C, preferably above 200 °C, more preferably above 300 °C under atmospheric pressure. Suitable solvents are 1-octadecene, oleylamine, oleic acid, octadecylamine or a mixture thereof.

### Preparing the mixture comprising metal hydroxide nanosheets and metal ions in a nonpolar solvent in a first embodiment

In a first embodiment, the mixture comprising metal hydroxide nanosheets and metal ions in a nonpolar solvent may be prepared by dry mixing the metal hydroxide nanosheets with a salt comprising the metal ions, and mixing this with the nonpolar solvent.

When the metal hydroxide nanosheets comprise hydroxides of A, the metal ions comprise ions of B, i.e. aluminium ions and/or gallium ions and/or scandium ions. When the metal hydroxide nanosheets comprise hydroxides of B, the metal ions comprise ions of A, i.e. yttrium ions and/or lutetium ions and/or gadolinium ions. The metal ions may comprise ions of the rare-earth metal RE.

A person skilled in the art can select a suitable salt or alkoxide for the ions to be added. Preferably, the salt or alkoxide dissolves in a nonpolar solvent. Preferably, the salt or alkoxide is anhydrous. Examples are metal chlorides, or other halogens, isopropoxides, acetates, acetylacetonates.

The mixture is preferably degassed and/or heated under reduced pressure. This allows to remove water and/or other impurities from the second mixture. The second mixture is preferably heated at 80°C or more, more preferably 80 to 120 °C. The second mixture is preferably heated for 30 minutes, more preferably for 30 minutes to 2 hours. More preferably, the second mixture is heated under vacuum.

### Preparing the mixture comprising metal hydroxide nanosheets and metal ions in a nonpolar solvent in a second embodiment

In a second embodiment, the preparing a mixture comprising metal hydroxide nanosheets and metal ions in a nonpolar solvent comprises the steps of:
i. preparing a first mixture comprising metal hydroxide nanosheets in a nonpolar solvent, and ii. adding metal ions to the first mixture to obtain a second mixture.

The metal hydroxide nanosheets are mixed with a nonpolar solvent. Preferably, the nonpolar solvent has a high boiling point, such as a boiling point of above 100 °C, preferably above 200 °C, more preferably above 300 °C under atmospheric pressure. Suitable solvents are 1-octadecene, oleylamine, oleic acid, octadecylamine or a mixture thereof.

Preferably, the first mixture comprising metal hydroxide nanosheets in a nonpolar solvent is degassed, and/or heated under reduced pressure. This allows to remove water and/or other impurities from the mixture. The mixture is preferably heated at 80°C or more, more preferably 80 to 120 °C. The mixture is preferably heated for 30 minutes, more preferably for 30 minutes to 2 hours. More preferably, the mixture is heated under vacuum.

Metal ions are added to the first mixture to obtain a second mixture.

When the metal hydroxide nanosheets comprise hydroxides of A, the metal ions comprise ions of B, i.e. aluminium ions and/or gallium ions and/or scandium ions.

When the metal hydroxide nanosheets comprise hydroxides of B, the metal ions comprise ions of A, i.e. yttrium ions and/or lutetium ions and/or gadolinium ions.

The metal ions may comprise ions of the rare-earth metal RE.

The metal ions may be added to the first mixture by preparing a solution of the metal ions, and adding this solution to the first mixture. The solvent of the solution may be a polar solvent, or preferably a nonpolar solvent.

The polar solvent may comprise water.

The nonpolar solvent may comprise the same solvent as the first nonpolar solvent in step a., or it may comprise a different nonpolar solvent. The nonpolar solvent may be a high boiling point nonpolar solvent. Examples of nonpolar solvents are diethylether, toluene, hexane, cyclohexane, tetrahydrofuran, chloroform. Examples of suitable high boiling point nonpolar solvents are 1-octadecene, oleylamine, oleic acid, octadecylamine or a mixture thereof.

A person skilled in the art can select a suitable salt or alkoxide for the ions to be added. Preferably, the salt or alkoxide dissolves in a nonpolar solvent. Preferably, the salt or alkoxide is anhydrous. Examples are metal chlorides, or other halogens, isopropoxides, acetates, acetylacetonates.

The solution comprising metal ions may be degassed, and/or heated under reduced pressure. This allows to remove water and/or other impurities from the solution. The solution is preferably heated at 80°C or more, more preferably 80 to 120 °C. The solution is preferably heated for 30 minutes, more preferably for 30 minutes to 2 hours. More preferably, the solution is heated under vacuum.

If a hydrated salt is used, the degassing of the solution should be performed with extra care, and a high boiling point nonpolar solvent is preferably added before degassing.

When the solution comprises a polar solvent, and/or a low boiling point nonpolar solvent, the degassing of the solution should be performed with extra care and a high boiling point nonpolar solvent should be added beforehand.

When a high boiling point nonpolar solvent is added, the lower boiling point solvent will be removed, yielding a solution of the metal ions in the high boiling point nonpolar solvent. The high boiling point nonpolar solvent is preferably 1-octadecene, oleylamine, oleic acid, octadecylamine or a mixture thereof.

The solution comprising metal ions is added to the first mixture to obtain a second mixture. The second mixture is preferably degassed and/or heated under reduced pressure. This allows to remove water and/or other impurities from the mixture. The mixture is preferably heated at 80°C or more, more preferably 80 to 120 °C. The mixture is preferably heated for 30 minutes, more preferably for 30 minutes to 2 hours. More preferably, the mixture is heated under vacuum.

If a hydrated salt is used, and the solution has not been degassed prior to adding to the first mixture, the degassing of the second mixture should be performed with extra care.

If the solvent of the added solution is a polar solvent, or if the solvent of the added solution is a low boiling point nonpolar solvent, the degassing of the second mixture should be performed with extra care.

### Preparing the mixture comprising metal hydroxide nanosheets and metal ions in a nonpolar solvent in a third embodiment

In a third embodiment, the preparing a mixture comprising metal hydroxide nanosheets and metal ions in a nonpolar solvent comprises the steps of:
i. preparing a first mixture comprising metal ions in a nonpolar solvent, and ii. adding metal hydroxide nanosheets to the first mixture to obtain a second mixture.

The method in a third embodiment comprises preparing a first mixture comprising metal ions in a first nonpolar solvent.

In an embodiment, the metal ions comprise ions of A.

In an embodiment, the metal ions comprise ions of B.

The metal ions may comprise RE.

The first mixture comprises a first nonpolar solvent. A nonpolar solvent may be defined as a solvent having a dielectric constant of less than 15. Preferably, the first nonpolar solvent has a high boiling point, such as a boiling point of above 100 °C, preferably above 200 °C, more preferably above 300 °C under atmospheric pressure. Suitable solvents are 1-octadecene, oleylamine, oleic acid, octadecylamine or a mixture thereof.

The first mixture comprises metal ions. The metal ions may be dissolved into the first nonpolar solvent directly, or by first preparing a solution of the metal ions, and adding this solution to the first nonpolar solvent. The solvent of this solution may be a polar solvent, or preferably a nonpolar solvent.

The polar solvent may comprise water.

The nonpolar solvent may comprise the same solvent as the first nonpolar solvent in step a., or it may comprise a different nonpolar solvent. The nonpolar solvent may be a high boiling point nonpolar solvent. Examples of nonpolar solvents are diethylether, toluene, hexane, cyclohexane, tetrahydrofuran, chloroform. Examples of suitable high boiling point nonpolar solvents are 1-octadecene, oleylamine, oleic acid, octadecylamine or a mixture thereof.

A person skilled in the art can select a suitable salt or alkoxide for the ions to be added. Preferably, the salt or alkoxide dissolves in a nonpolar solvent. Preferably, the salt or alkoxide is anhydrous. Examples are metal chlorides, or other halogens, isopropoxides, acetates, acetylacetonates.

When a solution is first prepared and added to the first nonpolar solvent, the solvent of this solution should be removed. The lower boiling point solvent will be removed, yielding the first mixture comprising the metal ions in the first nonpolar solvent.

This may be done by degassing, and/or heating under reduced pressure. This allows to remove water and/or other impurities from the solution. The solution is preferably heated at 80°C or more, more preferably 80 to 120 °C. The solution is preferably heated for 30 minutes, more preferably for 30 minutes to 2 hours. More preferably, the solution is heated under vacuum.

If a hydrated salt is used, the degassing of the solution should be performed with extra care.

When the solution comprises a polar solvent, and/or a low boiling point nonpolar solvent, the degassing of the solution should be performed with extra care.

Preferably, the first mixture comprising metal ions in a first nonpolar solvent is degassed, and/or heated under reduced pressure. This allows to remove water and/or other impurities from the mixture. The mixture is preferably heated at 80°C or more, more preferably 80 to 120 °C. The mixture is preferably heated for 30 minutes, more preferably for 30 minutes to 2 hours. More preferably, the mixture is heated under vacuum.

The method in a third embodiment comprises adding metal hydroxide nanosheets to the first mixture to obtain a second mixture.

When the metal hydroxide nanosheets comprise hydroxides of A, the metal ions comprise ions of B.

When the metal hydroxide nanosheets comprise hydroxides of B, the metal ions comprise ions of A.

The metal hydroxide nanosheets may comprise RE hydroxide nanosheets.

The metal hydroxide nanosheets may be added to the first mixture by adding dry nanosheets directly into the first mixture.

The metal hydroxide nanosheets may be added to the first mixture by first preparing a mixture (dispersion) of the nanosheets in a solvent, and adding this mixture to the first mixture. The solvent may be a polar solvent, but is preferably a nonpolar solvent.

The polar solvent may comprise water.

The nonpolar solvent may comprise the same solvent as the first nonpolar solvent in step a., or it may comprise a different nonpolar solvent. The nonpolar solvent may be a high boiling point nonpolar solvent. Examples of nonpolar solvents are diethylether, toluene, hexane, cyclohexane, tetrahydrofuran, chloroform. Examples of suitable high boiling point nonpolar solvents are 1-octadecene, oleylamine, oleic acid, octadecylamine or a mixture thereof.

When the mixture comprising metal hydroxide nanosheets comprises a nonpolar solvent, the mixture may be degassed, and/or heated under reduced pressure. This allows to remove water and/or other impurities from the mixture. The mixture is preferably heated at 80°C or more, more preferably 80 to 120 °C. The mixture is preferably heated for 30 minutes, more preferably for 30 minutes to 2 hours. More preferably, the mixture is heated under vacuum.

The second mixture is preferably degassed and/or heated under reduced pressure. This allows to remove water and/or other impurities from the second mixture. The second mixture is preferably heated at 80°C or more, more preferably 80 to 120 °C. The second mixture is preferably heated for 30 minutes, more preferably for 30 minutes to 2 hours. More preferably, the second mixture is heated under vacuum.

When metal hydroxide nanosheets are added to the first mixture in a mixture comprising a polar solvent, and/or comprising a low boiling point nonpolar solvent, the degassing of the second mixture should be performed with extra care.

### b. heating the mixture to obtain particles

The mixture is heated to obtain particles.

Preferably, the second mixture is heated at a temperature between 100 and 400 °C, preferably between 200 and 300 °C. Preferably, the second mixture is heated under inert atmosphere, for example N₂ or Ar gas. Preferably, the second mixture is heated for 10 minutes to 4 hours, preferably between 30 minutes and 2 hours.

### c. separating the particles from the mixture

The particles are separated from the mixture.

Preferably, the second mixture is cooled to room temperature.

Preferably, a methanol/butanol 1/1 mixture or acetone is added to the second mixture, followed by centrifugation to separate the particles. Preferably, the particles are dried.

### d. heating the separated particles to obtain A₃B₅O₁₂:RE garnet nanoparticles

The dried particles are heated to obtain A₃B₅O₁₂:RE nanoparticles. This heating, or calcination, allows to form the garnet crystal phase.

Preferably, said heating comprises heating a mixture comprising the nanoparticles and a protective matrix. This prevents particle growth and sintering during the calcination. The protective matrix may be a salt, preferably K₂SO₄. Said mixture can be prepared according to WO2021/043762A.

Preferably, said mixture is prepared by
- dry mixing the nanoparticles and the protective matrix; and/or
- mixing the nanoparticles and the protective matrix into a liquid to obtain a dispersion, and preferably separating the liquid from the dispersion; and/or
- preparing an emulsion comprising a disperse phase and a continuous phase, said disperse phase comprising the nanoparticles and the protective matrix, and preferably, demulsifying said emulsion and separating liquid from said demulsified emulsion.

The particles are preferably heated at a temperature between 800 and 1200 °C, more preferably between 950 and 1050 °C, in air. The particles are preferably heated for at least 30 minutes, more preferably at least 1 hour, and preferably at most 4 hours, more preferably at most 2 hours.

Preferably, the method comprises a further heating step, wherein the obtained A₃B₅O₁₂:RE garnet nanoparticles are heated in a reducing atmosphere. This additional heating may improve the optical properties of the nanoparticles. Preferably, said heating is performed at a temperature between 500 and 900 °C, more preferably between 600 and 800 °C. Preferably, said heating is performed for at least 30 min, more preferably at least 1 hour and preferably at most 4 hours, more preferably at most 2 hours. A reducing atmosphere is an atmospheric condition in which oxidation is prevented by removal of oxygen and other oxidizing gases or vapours, and which may contain actively reducing gases such as hydrogen and/or carbon monoxide. Preferably this heating in a reducing atmosphere is achieved by a double crucible method using active carbon, or using a reducing gas like a H₂/Ar mixture.

### Nanoparticles

According to the invention, there is further provided rare-earth metal doped garnet nanoparticles.

The methods as described above allow to obtain the nanoparticles of the invention.

The nanoparticles of the invention are of the type A₃B₅O₁₂:RE, wherein A is one or more selected from the group of yttrium, lutetium, or gadolinium; B is one or more selected from the group of aluminum, gallium, or scandium, and RE is a rare-earth metal.

The nanoparticles of the invention may comprise Y₃Al₅O₁₂:RE (YAG:RE), Lu₃Al₅O₁₂:RE (LuAG:RE), (Yₓ,Lu₍₁₋ₓ₎)₃Al₅O₁₂:RE ((Lu,Y)AG:RE), (Yₓ,Lu₍₁₋ₓ₎)₃(Al_{1-y}Ga_{y})₅O₁₂:RE, (Yₓ,Lu₍₁₋ₓ₎)₃(Al_{1-y}Sc_{y})₅O₁₂:RE, (Yₓ,Lu₍₁₋ₓ₎)₃(Sc_{1-y}Ga_{y})₅O₁₂:RE, (Yₓ,Gd₍₁₋ₓ₎)₃(Al_{1-y}Ga_{y})₅O₁₂:RE, (Yₓ,Gd₍₁₋ₓ₎)₃(Al_{1-y}Sc_{y})₅O₁₂:RE, (Yₓ,Gd₍₁₋ₓ₎)₃(Sc_{1-y}Ga_{y})₅O₁₂:RE, (Luₓ,Gd₍₁₋ₓ₎)₃(Al_{1-y}Ga_{y})₅O₁₂:RE, (Luₓ,Gd₍₁₋ₓ₎)₃(Al_{1-y}Sc_{y})₅O₁₂:RE, or (Luₓ,Gd₍₁₋ₓ₎)₃(Sc_{1-y}Ga_{y})₅O₁₂:RE wherein RE is a rare-earth metal, and x and y can have any value between and including 0 and 1.

Preferably, RE is cerium and/or terbium and/or europium. The cerium and/or terbium and/or europium is present as a trivalent ion, i.e. Ce³⁺ or Tb³⁺ or Eu³⁺. Ce³⁺ shows, upon suitable excitation, yellow-green emission. Tb³⁺ shows, upon suitable excitation, green emission. Eu³⁺ shows, upon suitable excitation, red emission. More preferably, RE is a combination of cerium and terbium or a combination of europium and terbium.

The rare-earth metal RE is present as a dopant. Preferably, the doping ratio is between about 0.01% and about 3% for cerium doped nanoparticles, more preferably the doping ratio is about 2.5%. As used herein, the doping ratio is the percentage of doping ions relative to the total of doping ions and yttrium atoms in the crystal lattice.

Preferably, in the case of nanoparticles co-doped with both cerium and terbium, the doping ratio of cerium is between about 0.01% and about 2.5%, and the doping ratio of terbium is at least about 30%.

Nanoparticles according to the invention include particles of which at least one dimension is at a nanometer scale, preferably ≤ 100 nm. Preferably, the nanoparticles according to the invention have at least one dimension ≤ 70 nm. Furthermore, the D₅₀ value of the smallest dimension of the nanoparticles is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). D₅₀ is defined as the median value of the length of the smallest dimension of the nanoparticles, measured from an ensemble of at least 50 representative particles. The size of the nanoparticles can also be determined with a physisorption technique, for example N₂-physisorption.

The nanoparticles are preferably capable of luminescence.

The nanoparticles may show an increased photoluminescence quantum yield compared to YAG:RE or LuAG:RE nanoparticles known in the art. Preferably, the photoluminescence quantum yield is as high as possible and at least about 10%. More preferably, the photoluminescence quantum yield is at least about 30%. More preferably, the photoluminescence quantum yield is at least about 50%.

Preferably, the nanoparticles according to the invention are capable of emitting in the yellow and/or green spectral range. As used herein, the term green emitting material refers to a material, which, upon suitable excitation, has one or more emission bands between 510 nm to 560 nm.

More preferably, the nanoparticles wherein RE is cerium or both cerium and terbium according to the invention are capable of emitting in the yellow and/or green spectral range.

### Luminescent composition

There is further provided a luminescent composition comprising the nanoparticles obtainable by the method of the invention, or the nanoparticles of the invention.

Preferably, the luminescent composition comprises a first luminescent material and a second luminescent material, wherein at least one of said first luminescent material or said second luminescent material comprises the nanoparticles according to the invention or obtainable with the method according to the invention.

Preferably, the luminescent composition comprises a first luminescent material capable of emitting light in a first wavelength range and a second luminescent material being capable of absorbing light in a second wavelength range, and having an emission spectrum which overlaps at least partly with one or more of the excitation bands of said first luminescent material. At least one of said first luminescent material or said second luminescent material comprises the nanoparticles according to the invention or the nanoparticles obtainable with the method according to the invention.

Preferably, the first luminescent material and second luminescent material are so arranged to each other to allow non-radiative energy transfer from the second luminescent material to the first luminescent material.

Preferably, the luminescent composition is prepared in an inert atmosphere. Examples of inert atmospheres are nitrogen or argon atmospheres. Preferably, the luminescent composition is prepared by adding a dry solvent to a mixture of the first luminescent material and second luminescent material. A dry solvent is also known as an anhydrous solvent, and is a solvent that does not contain water. Examples of suitable solvents include short chain alcohols such as methanol and ethanol, and diethyl ether. The mixing of the two luminescent materials may be enhanced by stirring, shaking, or ultrasonication. The luminescent composition is subsequently dried.

The first luminescent material is capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material is capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 480 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266, the contents of which are herewith incorporated by reference. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Forster- or Dexter-type energy transfer. The skilled person will realize that - since resonant energy transfer is in first order inversely proportional to interion distance at the power of 6 (in case of Forster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

Preferably, the first luminescent material and/or the second luminescent material comprise rare-earth metal doped garnet nanoparticles. This allows a large interaction surface between the first and second material, which (further) enables non-radiative energy transfer to occur. The rare-earth metal doped garnet nanoparticles have desirable luminescent properties. Examples of a rare-earth metal doped garnet nanoparticles suitable for the first luminescent material and/or second luminescent material is YAG:RE nanoparticles, LuAG:RE nanoparticles, and/or the rare-earth metal doped garnet nanoparticles of the invention.

Preferably, the first luminescent material comprises the rare-earth metal doped garnet nanoparticles of the invention, where the rare-earth metal is europium and/or terbium. These ions have desired absorption/emission characteristics.

Preferably, said second luminescent material comprises the rare-earth metal doped garnet nanoparticles according to the invention. The rare-earth metal doped garnet nanoparticles according to the invention are well suited for use in luminescent compositions. More preferably, the rare earth metal is cerium, or cerium and terbium. These ions have desired ab sorption/emission characteristics.

Preferably said first luminescent material and said second luminescent material are in the form of nanoparticles. Suitable nanoparticles include particles of which at least one dimension is at a nanometer scale, preferably ≤ 100 nm. The small size allows smaller distances between the surfaces of the first and second material, which (further) enables inter-particle non-radiative energy transfer to occur. Providing both materials in the form of nanoparticles allows more efficient mixing and even distribution of the particles, which further promotes inter-particle non-radiative energy transfer to occur.

As discussed, the D₅₀ value of the smallest dimension of the nanoparticles is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). D₅₀ is defined as the median value of the length of the smallest dimension of the nanoparticles, measured from an ensemble of at least 50 representative particles.

In another preferred embodiment, the first luminescent material is provided as a bulk material with the second luminescent material provided on the first luminescent material. In this context the term "bulk" especially means and/or includes greater than nanoscale, for example greater than 100 nm in diameter and including micro-size scales.

As discussed, the second luminescent material may comprise the rare-earth metal doped garnet nanoparticles according to the invention. In compositions wherein the second luminescent material comprises the nanoparticles of the invention, the first luminescent material is preferably as described below. More preferably, the second luminescent material comprises the rare-earth metal doped garnet nanoparticles of the invention, wherein the rare earth metal is cerium or cerium and terbium, and the first luminescent material is as described below.

The skilled person will understand that the first and second material have to be in close proximity for FRET to occur. The nanoparticles according to the invention might be treated as described in WO2020/053429 and/or WO2021/043762, both of which are hereby incorporated by reference.

### First luminescent material

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

Preferably, the first luminescent material comprises the rare-earth metal doped garnet nanoparticles according to the invention. More preferably, the first luminescent material comprises the rare-earth metal doped garnet nanoparticles according to the invention, wherein the rare-earth metal is europium and/or terbium.

In a preferred embodiment, the first luminescent material comprises a rare-earth doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃Al₅O₁₂:Ce³⁺ (or Eu³⁺ and/or Tb³⁺), BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF₂.GeO₂:Mn⁴⁺, and combinations thereof.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu₃Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping ratio of at least about 10%, more preferably having a doping ratio of between about 15% and about 80%. In case Tb³⁺ doping, the first luminescent material may for example have a host lattice doped having a doping ratio of at least about 15%, more preferably between about 30% and about 80% Tb³⁺. In case of Mn⁴⁺ doping, the first luminescent material may for example have a host lattice doped having a doping ratio of about 0.1-30%, most preferably between about 1-10%. In case of Mn²⁺ doping, the first luminescent material may for example have a host lattice doped having a doping ratio of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²⁻:Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdA₁₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (or Tb³⁺), LaAlO₃:Eu³⁺ (or Tb³⁺), LaB₃O₆:Eu³⁺ (or Tb³⁺), LaBO₃:Eu³⁺ (or Tb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOI:Eu³⁺ (or Tb³⁺), LaP₃O₉:Eu³⁺ (or Tb³⁺), LaPO₄:Eu³⁺ (or Tb³⁺), LaYO₃:Eu³⁺ (or Tb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), Lu₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuBO₃ (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁺ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-site1):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (or Tb³⁺), Y₃PO₇:Eu³⁺ (or Tb³⁺), Y₄GeO₈:Eu³⁺ (or Tb³⁺), Y₈P₂O₁₇:Eu³⁺ (or Tb³⁺), YAl₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### Second luminescent material

The second luminescent material preferably comprises the rare-earth metal doped garnet nanoparticles according to the invention. In such compositions, the rare-earth metal is preferably cerium and/or terbium.

As discussed, the first luminescent material may comprise nanoparticles according to the invention. In compositions wherein the first luminescent material comprises the nanoparticles according to the invention, the second luminescent material is preferably as described below.

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 380 to 580 nm, preferably wherein said second luminescent material has one or more excitation bands in the UV-A (315 to 400 nm), violet (400 to 440 nm), blue (440 to 480 nm) or green (510 to 560 nm) wavelength range, most preferably in the blue (440 to 480 nm) wavelength range. LEDs based on (Al,In,Ga)N provide efficient "pump" light generation in the violet to blue wavelength range (about 400 nm to about 480 nm). Examples of blue-excitable materials are CaAlSiN₃:Eu²⁺, Y₃Al₅O₁₂:Ce³⁺, CsPbBr₃, CdSe, InP.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In another preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), MgF₂, CaF₂, Sr₂SiO₄, Ba₂SiO₄, Ca₂MgSi₂O₇, LiSrPO₄, OCaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

Preferably, the first luminescent material comprises Y₂O₃:RE, wherein RE is europium(III), and the second luminescent material comprises the rare-earth metal doped garnet nanoparticles according to the invention, wherein the rare earth metal is cerium and/or terbium. More preferably, the Y₂O₃:RE material is provided as nanoparticles.

In a preferred embodiment, the first luminescent material comprises rare-earth metal doped nanoparticles, wherein the rare earth metal is europium(III), and the second luminescent material comprises the rare-earth metal doped garnet nanoparticles of the invention, wherein the rare earth metal is cerium(III) and/or terbium(III).

The invention further relates to a light-emitting device comprising the luminescent material obtainable by the method according to the invention. Preferably the light-emitting device further comprises an excitation source for the luminescent material, such as for the second luminescent material. Preferably the excitation sources is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the rare-earth metal doped garnet nanoparticles or luminescent composition according to the inventions deposited on top of the LED chip. The nanoparticles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the rare-earth metal doped garnet nanoparticles of the invention as a taggant. A taggant is a marker added to materials to allow various forms of testing. The overall excitation/emission spectra of the luminescent materials and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

The invention is further defined in the following clauses:
1. A method for preparing A₃B₅O₁₂:RE garnet nanoparticles, wherein A is one or more of yttrium, lutetium and gadolinium, B is one or more of aluminum, gallium, and scandium, and RE is a rare-earth metal, comprising the steps of:
   a. preparing a mixture comprising metal hydroxide nanosheets and metal ions in a nonpolar solvent,
   b. heating the mixture to obtain particles,
   c. separating the particles from the mixture, and
   d. heating the separated particles to obtain A₃B₅O₁₂:RE garnet nanoparticles,
   wherein:
   - the metal hydroxide nanosheets comprise hydroxides of A, and the metal ions comprise ions of B, or
   - the metal hydroxide nanosheets comprise hydroxides of B, and the metal ions comprise ions of A,
   and wherein the metal hydroxide nanosheets comprise RE, and/or the metal ions comprise ions of RE.
2. The method according to clause 1, wherein the rare-earth metal RE comprises cerium, terbium, europium, or a mixture thereof.
3. The method according to any of the preceding clauses, wherein said a. preparing a mixture comprising metal hydroxide nanosheets and metal ions in a nonpolar solvent comprises the steps of:
   i. preparing a first mixture comprising metal hydroxide nanosheets in a nonpolar solvent, and
   ii. adding metal ions to the first mixture to obtain a second mixture;
   or wherein said a. preparing a mixture comprising metal hydroxide nanosheets and metal ions in a nonpolar solvent comprises the steps of:
   i. preparing a first mixture comprising metal ions in a nonpolar solvent, and
   ii. adding metal hydroxide nanosheets to the first mixture to obtain a second mixture.
4. The method according to any preceding clauses, wherein:
   - the nonpolar solvent of the first mixture comprises 1-octadecene, and/or oleylamine, and/or octadecylamine and/or oleic acid and/or a mixture thereof;
   - the first mixture is degassed; and/or
   - the first mixture is heated at 80 °C or more under reduced pressure for at least 30 minutes.
5. The method according to any preceding clauses, wherein the metal ions are added as a solution, preferably wherein:
   - the solvent of the solution is chosen from the group of water, diethylether, toluene, hexane, cyclohexane, tetrahydrofuran, chloroform, 1-octadecene, oleylamine, octadecylamine, oleic acid, and/or a mixture thereof;
   - the solution is degassed; and/or
   - the solution is heated at 80 °C or more under reduced pressure for at least 30 minutes.
6. The method according to any preceding clause, wherein
   - said heating in step b. comprises heating for a period of at least about 0.5 hour, preferably at least about 1 hour, more preferably at least about 2 hours, and/or for a period of at most about 6 hours, preferably at most about 4 hours;
   - said heating in step b. is effected under inert atmosphere; and/or
   - said heating in step b. is effected at a temperature of at least about 120 °C, preferably at least about 150 °C, and/or at a temperature of at most about 400 °C, preferably at most about 300 °C.
7. The method according to any preceding clause, wherein in step d., said heating the particles to obtain aluminum-based garnet nanoparticles:
   - comprises heating for a period of at least about 30 minutes, preferably for at least about 1 hour, and/or for a period of at most about 5 hours, preferably for at most about 4 hours;
   - is effected at a temperature of at least about 800 °C, preferably for at least about 900 °C, and/or at a temperature of at most about 1400 °C, preferably at most about 1200 °C; and/or
   - comprises heating in a protective matrix.
8. The method according to any preceding clause, further comprising a third heating step, wherein the obtained A₃B₅O₁₂:RE garnet nanoparticles are heated in a reducing atmosphere, preferably:
   - for a period of at least about 30 minutes, more preferably for at least about 1 hour,
   - for a period of at most about 4 hours, more preferably for at most about 2 hours, and/or
   - at a temperature between about 500 and about 900 °C, more preferably between about 600 and 800 °C.
9. A₃B₅O₁₂:RE garnet nanoparticles, wherein A is one or more of yttrium, lutetium and gadolinium, B is one or more of aluminum, gallium, and scandium, and RE is a rare-earth metal, obtainable by the method according to any of the preceding clauses.
10. The nanoparticles of clause 9, wherein the D₅₀ value of the smallest dimension of the nanoparticles is ≥ 0.5 nm and ≤ 100 nm, preferably ≥ 0.5 nm and ≤ 50 nm, preferably ≥ 0.5 nm and ≤ 10 nm.
11. The nanoparticles of any of clauses 9-10, wherein the quantum yield is at least about 10%, preferably at least about 30%, more preferably at least about 50%.
12. The nanoparticles of any of clauses 9-11, capable of emitting in the green and/or yellow and/or red spectral range.
13. The nanoparticles of any of clauses 9-12, wherein the rare-earth metal is cerium and/or terbium, or wherein the rare-earth metal is europium and/or terbium.
14. A luminescent composition comprising the nanoparticles according to any one of clauses 9 to 13.
15. A luminescent composition according to clause 14, comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises nanoparticles according to any one of clauses 9 to 13, preferably wherein the first luminescent material and second luminescent material are so arranged to each other to allow non-radiative energy transfer from the second luminescent material to the first luminescent material.
16. Luminescent composition according to any of clauses 14-15, wherein the second material comprises nanoparticles according to any of clauses 9-13, and the first material comprises (Y,Lu,Gd)₂O₃:Eu³⁺ or (Y,Lu,Gd)₂O₃:Eu³⁺,Tb³⁺ nanoparticles.
17. Light emitting device comprising the luminescent composition according to any one of clauses 14 to 16 and a violet and/or blue light emitting semiconductor material.
18. A system comprising the luminescent composition according to any one of clauses 14 to 16 and/or a light emitting device according to clause 17, the system being one or more of the following:
   a. office lighting systems
   b. household application systems
   c. shop lighting systems,
   d. home lighting systems,
   e. accent lighting systems,
   f. spot lighting systems,
   g. theatre lighting systems,
   h. fibre-optics application systems,
   i. projection systems,
   j. self-lit display systems,
   k. pixelated display systems,
   l. segmented display systems,
   m. warning sign systems,
   n. medical lighting application systems,
   o. indicator sign systems, and
   p. decorative lighting systems
   q. portable systems
   r. automotive applications
   s. green house lighting systems
   t. display backlighting
   u. emissive displays
   v. microLEDs
19. Use of a luminescent composition according to any one of clauses 14 to 16 as a taggant, for example in applications such as anti-counterfeiting.

### EXAMPLES

### Example 1: Preparation of terbium-doped yttrium hydroxide nanosheets

93.3 mg TbCl₃.6H₂O, 303.4 mg YCl₃.6H₂O, 949.7 mg NaCl₃ and 2.8 g hexamethylenetetramine were mixed in 250 mL milli-Q water. The mixture was stirred under N₂ atmosphere and heated at 96 °C for 1 hour. Subsequently, the mixture was cooled to room temperature and centrifuged. The supernatant was decanted and the sediment was washed with 10 mL milli-Q water. After centrifugation the sediment was dried under vacuum. This yields yttrium hydroxide nanosheets doped with 20% Tb.

### Example 2: Preparation of aluminum hydroxide nanosheets

187.6 mg Al(NO₃)₃.9H₂O, 1.6 g KNO₃, and 2.8 g hexamethylenetetramine were mixed in 200 mL milli-Q water. The mixture was stirred under N₂ atmosphere and heated at 96 °C for 1 hour. Subsequently, the mixture was cooled to room temperature and centrifuged. The supernatant was decanted and the sediment was washed with 10 mL milli-Q water. After centrifugation the sediment was dried under vacuum. This yields aluminum hydroxide nanosheets.

### Example 3: Preparation of Y₃Al₅O₁₂:Tb by addition of AlCl₃.6H₂O to terbium-doped yttrium hydroxide nanosheets and calcination

0.625 mmol (88 mg) Y-OH nanosheets obtained according to the procedure in Example 1 were mixed with 150 mL 1-octadecene and 30 mL oleylamine in a round bottom 3-neck flask and degassed under vacuum for 1 hour at 100 °C.

0.42 mmol AlCl₃.6H₂O was dissolved in 0.5 mL milli-Q water and added to the mixture with Y-OH nanosheets. The mixture was subsequently degassed under vacuum at 100 °C to remove all water and/or other impurities.

Under N₂ atmosphere, the mixture was heated to 250 °C and allowed to react at this temperature for 2 hours. Afterwards, the mixture was cooled down to room temperature and centrifuged. The supernatant was removed and the precipitate was washed with 5 mL methanol and 5 mL butanol. The washing step was performed twice and then the product was dried under vacuum.

The as obtained powder was then calcined for 2 hours at 1020 °C in air.

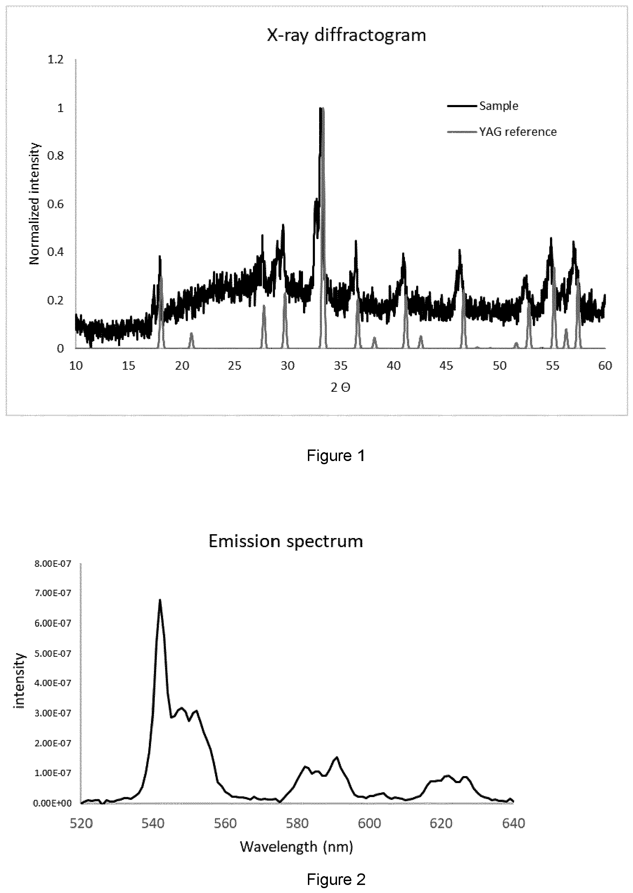

The X-ray powder diffractogram of the final product is shown in figure 1, showing the YAG crystal phase formed. The emission spectrum is shown in figure 2, showing the characteristic YAG:Tb³⁺ spectral shape. Thus, Y₃Al₅O₁₂:Tb particles were obtained.

### Example 4: Preparation of Y₃Al₅O₁₂:Tb by addition of anhydrous AlCl₃ to terbium-doped yttrium hydroxide nanosheets and calcination

0.625 mmol (88 mg) Y-OH nanosheets obtained according to example 1 were mixed with 150 mL 1-octadecene and 30 mL oleylamine in a round bottom 3-neck flask and degassed under vacuum for 1 hour at 100 °C.

1 mmol anhydrous AlCl₃ was mixed with 1 mL diethylether and added to the mixture with Y-OH nanosheets. The mixture was subsequently degassed under vacuum at 100 °C to remove all water and diethylether and/or other impurities.

Under N₂ atmosphere, the mixture was heated to 250 °C and allowed to react for 2 hours at this temperature. Afterwards, the mixture was cooled down to room temperature and centrifuged. The supernatant was removed and the precipitate was washed with 5 mL methanol and 5 mL butanol. The washing step was performed twice and then the product was dried under vacuum.

The as obtained powder was calcined for 2 hours at 1020 °C in air.

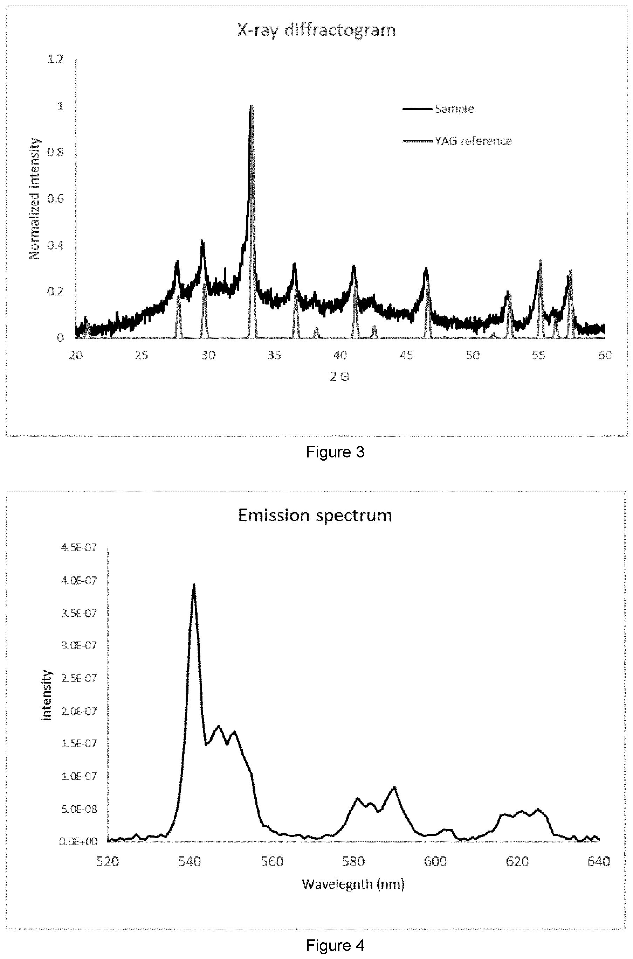

The X-ray powder diffractogram of the final product is shown in figure 3, showing the YAG crystal phase formed. The emission spectrum is shown in figure 4, showing the characteristic YAG:Tb³⁺ spectral shape. Thus, Y₃Al₅O₁₂:Tb particles were obtained.

### Example 5: Preparation of Y₃Al₅O₁₂:Tb by addition of Al-acetylacetonate to terbium-doped yttrium hydroxide nanosheets and calcination

0.625 mmol (88 mg) Y-OH nanosheets obtained according to Example 1 were mixed with 150 mL 1-octadecene in a round bottom 3-neck flask and degassed under vacuum for 1 hour at 100 °C.

0.906 mmol Aluminum acetylacetonate was mixed with 20 mL 1-octadecene and added to the mixture with Y-OH nanosheets. The mixture was subsequently degassed under vacuum at 100 °C to remove all water and/or other impurities.

Under N₂ atmosphere, the mixture was heated to 250 °C and allowed to react for 2 hours at this temperature. Afterwards, the mixture was cooled down to room temperature and centrifuged. The supernatant was removed and the precipitate was washed with 5 mL methanol and 5 mL butanol. The washing step was performed twice and then the product was dried under vacuum.

The as obtained powder was calcined for 2 hours at 1020 °C in air.

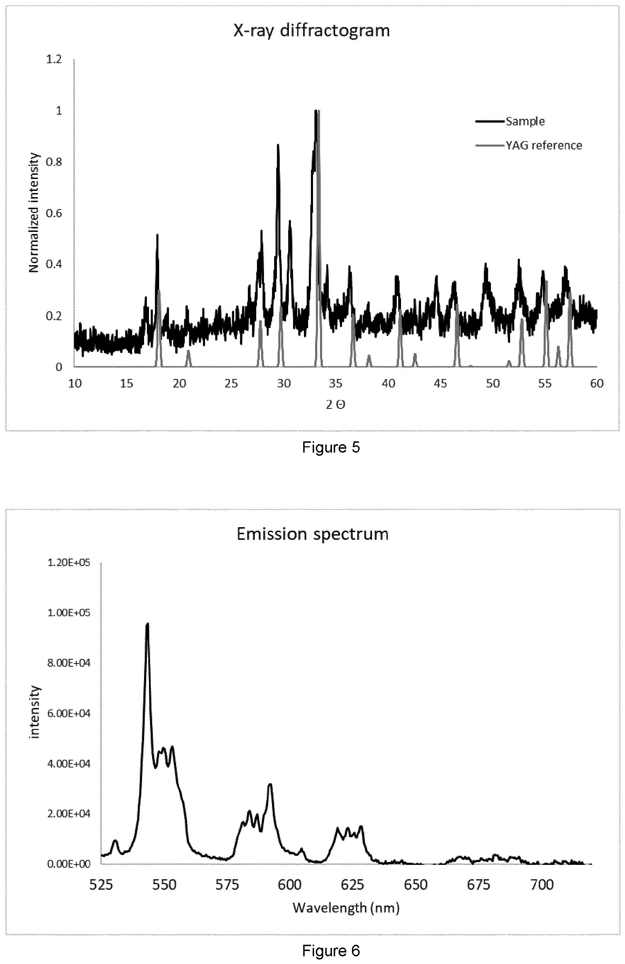

The X-ray powder diffractogram of the final product is shown in figure 5, showing the YAG crystal phase formed, which coexists with another crystal phase. The emission spectrum is shown in figure 6, showing the characteristic YAG:Tb³⁺ spectral shape.

Thus, Y₃Al₅O₁₂:Tb particles were obtained.

## Claims

1. A method for preparing A₃B₅O₁₂:RE garnet nanoparticles, wherein A is one or more of yttrium, lutetium and gadolinium, B is one or more of aluminum, gallium, and scandium, and RE is a rare-earth metal, comprising the steps of:
a. preparing a mixture comprising metal hydroxide nanosheets and metal ions in a nonpolar solvent,
b. heating the mixture to obtain particles,
c. separating the particles from the mixture, and
d. heating the separated particles to obtain A₃B₅O₁₂:RE garnet nanoparticles,
wherein:
- the metal hydroxide nanosheets comprise hydroxides of A, and the metal ions comprise ions of B, or
- the metal hydroxide nanosheets comprise hydroxides of B, and the metal ions comprise ions of A,
and wherein the metal hydroxide nanosheets comprise RE, and/or the metal ions comprise ions of RE.

2. The method according to claim 1, wherein the rare-earth metal RE comprises cerium, terbium, europium, or a mixture thereof.

3. The method according to any of the preceding claims, wherein said a. preparing a mixture comprising metal hydroxide nanosheets and metal ions in a nonpolar solvent comprises the steps of:
i. preparing a first mixture comprising metal hydroxide nanosheets in a nonpolar solvent, and
ii. adding metal ions to the first mixture to obtain a second mixture;
or wherein said a. preparing a mixture comprising metal hydroxide nanosheets and metal ions in a nonpolar solvent comprises the steps of:
i. preparing a first mixture comprising metal ions in a nonpolar solvent, and
ii. adding metal hydroxide nanosheets to the first mixture to obtain a second mixture.

4. The method according to any preceding claims, wherein:
- the nonpolar solvent of the first mixture comprises 1-octadecene, and/or oleylamine, and/or octadecylamine and/or oleic acid and/or a mixture thereof;
- the first mixture is degassed; and/or
- the first mixture is heated at 80 °C or more under reduced pressure for at least 30 minutes.

5. The method according to any preceding claims, wherein the metal ions are added as a solution, preferably wherein:
- the solvent of the solution is chosen from the group of water, diethylether, toluene, hexane, cyclohexane, tetrahydrofuran, chloroform, 1-octadecene, oleylamine, octadecylamine, oleic acid, and/or a mixture thereof;
- the solution is degassed; and/or
- the solution is heated at 80 °C or more under reduced pressure for at least 30 minutes.

6. The method according to any preceding claim, wherein
- said heating in step b. comprises heating for a period of at least about 0.5 hour, preferably at least about 1 hour, more preferably at least about 2 hours, and/or for a period of at most about 6 hours, preferably at most about 4 hours;
- said heating in step b. is effected under inert atmosphere; and/or
- said heating in step b. is effected at a temperature of at least about 120 °C, preferably at least about 150 °C, and/or at a temperature of at most about 400 °C, preferably at most about 300 °C.

7. The method according to any preceding claim, wherein in step d., said heating the particles to obtain aluminum-based garnet nanoparticles:
- comprises heating for a period of at least about 30 minutes, preferably for at least about 1 hour, and/or for a period of at most about 5 hours, preferably for at most about 4 hours;
- is effected at a temperature of at least about 800 °C, preferably for at least about 900 °C, and/or at a temperature of at most about 1400 °C, preferably at most about 1200 °C; and/or
- comprises heating in a protective matrix.

8. The method according to any preceding claim, further comprising a third heating step, wherein the obtained A₃B₅O₁₂:RE garnet nanoparticles are heated in a reducing atmosphere, preferably:
- for a period of at least about 30 minutes, more preferably for at least about 1 hour,
- for a period of at most about 4 hours, more preferably for at most about 2 hours, and/or
- at a temperature between about 500 and about 900 °C, more preferably between about 600 and 800 °C.

9. A₃B₅O₁₂:RE garnet nanoparticles, wherein A is one or more of yttrium, lutetium and gadolinium, B is one or more of aluminum, gallium, and scandium, and RE is a rare-earth metal, obtainable by the method according to any of the preceding claims.

10. The nanoparticles of claim 9, wherein the D₅₀ value of the smallest dimension of the nanoparticles is ≥ 0.5 nm and ≤ 100 nm, preferably ≥ 0.5 nm and ≤ 50 nm, preferably ≥ 0.5 nm and ≤ 10 nm.

11. The nanoparticles of any of claims 9-10, wherein the quantum yield is at least about 10%, preferably at least about 30%, more preferably at least about 50%.

12. The nanoparticles of any of claims 9-11, capable of emitting in the green and/or yellow and/or red spectral range.

13. The nanoparticles of any of claims 9-12, wherein the rare-earth metal is cerium and/or terbium, or wherein the rare-earth metal is europium and/or terbium.

14. A luminescent composition comprising the nanoparticles according to any one of claims 9 to 13.

15. A luminescent composition according to claim 14, comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises nanoparticles according to any one of claims 9 to 13, preferably wherein the first luminescent material and second luminescent material are so arranged to each other to allow non-radiative energy transfer from the second luminescent material to the first luminescent material.

16. Luminescent composition according to any of claims 14-15, wherein the second material comprises nanoparticles according to any of claims 9-13, and the first material comprises (Y,Lu,Gd)₂O₃:Eu³⁺ or (Y,Lu,Gd)₂O₃:Eu³⁺,Tb³⁺ nanoparticles.

17. Light emitting device comprising the luminescent composition according to any one of claims 14 to 16 and a violet and/or blue light emitting semiconductor material.

18. A system comprising the luminescent composition according to any one of claims 14 to 16 and/or a light emitting device according to claim 17, the system being one or more of the following:
a. office lighting systems
b. household application systems
c. shop lighting systems,
d. home lighting systems,
e. accent lighting systems,
f. spot lighting systems,
g. theatre lighting systems,
h. fibre-optics application systems,
i. projection systems,
j. self-lit display systems,
k. pixelated display systems,
l. segmented display systems,
m. warning sign systems,
n. medial lighting application systems,
o. indicator sign systems, and
p. decorative lighting systems
q. portable systems
r. automotive applications
s. green house lighting systems
t. display backlighting
u. emissive displays
v. microLEDs

19. Use of a luminescent composition according to any one of claims 14 to 16 as a taggant, for example in applications such as anti-counterfeiting.
